# EUROPÄISCHE PATENTSCHRIFT

(11) **EP 1 732 036 B1**
(45) Veröffentlichungstag und Bekanntmachung des Hinweises auf die Patenterteilung: **12.08.2009**
(21) Anmeldenummer: 05012502.0
(22) Anmeldetag: 10.06.2005
(51) Int. Cl.: G06Q 30/00

(54) **Bewertung einer Werbeaktion**
Evaluation of an advertisement
Evaluation d'une action publicitaire

(43) Veröffentlichungstag der Anmeldung: 13.12.2006
(73) Patentinhaber: HURRA Communications GmbH, 70599 Stuttgart (DE)
(72) Erfinder: Schweier, René, 70599 Stuttgart (DE)
(74) Vertreter: Wörz, Volker Alfred

(56) Entgegenhaltungen:
- US-A- 5 903 635
- US-A1- 2002 191 762
- US-A1- 2005 004 846

## Beschreibung

Die vorliegende Erfindung betrifft einen Server, der von einem Kunden über eine Telekommunikationsverbindung und eine bestimmte Telefonnummer anwählbar ist, und ein entsprechendes Verfahren.

Derartige Server sind bspw. in Form von Telekommunikationsservern aus dem Stand der Technik bekannt. Ein solcher Server wird von einem Kunden durch Eingabe einer entsprechenden Telefonnummer über eine herkömmliche öffentliche Telefonverbindung, eine sogenannte Public Switched Telephone Network (PSTN)-Verbindung, angewählt. Solche Telefonverbindungen werden auch als connection-oriented switched telephony (COST)-Verbindungen bezeichnet. Zur Anwahl des Servers nutzt der Kunde üblicherweise ein herkömmliches Telefon. Solche Telekommunikationsserver werden bspw. in einem Call-Center eingesetzt, um eingehende Anrufe nach vorgebbaren Kriterien vorverarbeiten und an bestimmte Mitarbeiter des Call-Centers weiterleiten zu können.

Ebenfalls bekannt sind einem Anbieter von Waren oder Dienstleistungen zugeordnete Telekommunikationsserver. Wenn ein Kunde bei einem bestimmten Anbieter etwas bestellen möchte, wählt er die Telefonnummer des Kunden bzw. des entsprechenden Servers. Die Telefonnummer entnimmt er bspw. einem Eintrag oder einer Werbeanzeige in einem Telefonbuch oder einer Werbeanzeige in einer Zeitschrift oder anderen Printmedien. Der Server vermittelt den Kunden nach einer Vorverarbeitung des Anrufs an den entsprechenden Mitarbeiter des Call-Centers weiter. Die Vorverarbeitung umfasst bspw. das Ermitteln, ob der Kunde Fragen zu einem bestellten Produkt hat, ein bestelltes Produkt umtauschen oder ein neues Produkt bestellen möchte. Die Steuerung der Vorverarbeitung kann bspw. akustisch und über Sprachsteuerung oder über Frequenzwahl (DTMF-Verfahren) erfolgen, wodurch der Kunde Informationen eingeben und an den Server übermitteln kann. Im persönlichen Gespräch mit dem Mitarbeiter gibt der Kunde dann die Bestellung auf. Es ist aber auch denkbar, dass der Server nicht nur die Vorverarbeitung des Anrufs übernimmt, sondern den gesamten Bestellvorgang abwickelt.

Des weiteren aus dem Stand der Technik bekannt, sind bspw. Server in Form von Internetservern. Auf einem Internetserver sind eine Fülle von Dokumenten bzw. Dokumenteninhalten abgelegt, die von einem Anwender über einen dem Anwender zugeordneten und über ein Client-Server-Netzwerk (z.B. das Internet) mit dem Internetserver verbundenen Client angefordert werden können. Die angeforderten Inhalten werden über das Netzwerk an den Client übermittelt und dem Anwender bspw. mittels eines Browsers auf einem Bildschirm ausgegeben. So kann der Anwender bspw. auf einer ersten Netzwerkseite einer Suchmaschine ein Suchwort eingeben und eine Suche auslösen. Dadurch fordert der Anwender eine zweite Netzwerkseite mit einer Liste von weiteren Netzwerkseiten an, in denen das Suchwort enthalten ist (sog. Trefferliste). Die zweite Netzwerkseite wird auf die Anfrage des Anwenders hin dynamisch generiert, indem ihr Inhalt von einem oder mehreren Servern geladen und zu der Seite zusammengesetzt wird. Dann wird die zweite Netzwerkseite an den Client übermittelt und dem Anwender angezeigt. Auf der zweiten Netzwerkseite können auch bestimmte Werbeaktionen, bspw. Werbebanner, dargestellt werden. Diese können, bspw. in Abhängigkeit von dem eingegebenen Suchwort, ebenfalls dynamisch generiert werden. Die Werbebanner können eine Verknüpfung (sog. Link) zu einem Internetserver umfassen. Diese Verknüpfung kann derart ausgestaltet sein, dass durch Aktivieren des Banners eine Voice-over-IP (VoIP)-Verbindung zwischen dem Client und dem Internetserver hergestellt wird. Zum Betreiben der VoIP-Verbindung nutzt der Anwender üblicherweise einen an das Internet angeschlossenen Computer oder ein herkömmliches Telefon, das über einen geeigneten Apparat an das Internet angeschlossen ist.

Zu solchen Internetservern kann ein Kunde über das Internet eine VoIP-Telefonverbindung aufbauen. Diese Art von Verbindungen werden auch als data network telephony (DNT)-Verbindungen bezeichnet. Internetserver werden bspw. in einem Internet-Call-Center eingesetzt, um eingehende VoIP-Anrufe nach vorgebbaren Kriterien vorverarbeiten und an bestimmte Mitarbeiter des Call-Centers weiterleiten zu können. Ebenfalls bekannt sind einem Anbieter von Waren oder Dienstleistungen zugeordnete Internetserver. Wenn ein Kunde bei einem bestimmten Anbieter etwas bestellen möchte, stellt er eine Internet-Verbindung zu dem entsprechenden Server her. Der Server vermittelt den Kunden nach einer Vorverarbeitung des VoIP-Anrufs an den entsprechenden Mitarbeiter des Call-Centers weiter. Die Vorverarbeitung kann bspw. über Sprachsteuerung, DTMF-Verfahren oder über Netzwerkseiten erfolgen, die dem Kunden ausgegeben werden, und auf denen der Kunde Informationen eingeben und an den Server absenden kann. Im persönlichen Gespräch mit dem Mitarbeiter über die VoIP-Verbindung gibt der Kunde dann die Bestellung auf. Es ist aber auch denkbar, dass der Internetserver nicht nur die Vorverarbeitung des Anrufs übernimmt, sondern den gesamten Bestellvorgang abwickelt. Außerdem ist es denkbar, dass die gesamte Vorverarbeitung und Bestellung des Produkts nicht sprachgesteuert, sondern über Netzwerkseiten erfolgt.

Problematisch bei den bekannten Verfahren ist es, dass bei einer telefonischen Bestellung von Produkten, sowohl über herkömmliche PSTN- als auch über VoIP-Verbindungen, praktisch keine Kontroll- oder Überwachungsmöglichkeit besteht, ob die geschalteten Werbeaktionen (z.B. Werbeanzeige oder Werbebanner) effizient sind, das heißt, ob die Werbeaktionen tatsächlich den gewünschten Effekt haben, nämlich zunächst Kunden zum Verbindungsaufbau zu dem beworbenen Anbieter bzw. zu einem diesem zugeordneten Server und letzten Endes zum Bestellen des beworbenen Produkts zu animieren.

Aus der Druckschrift US 2005/004846 A1 ist schon bekannt:
ein Verfahren zum Bestellen eines Produkts bei einem Anbieter durch einen Kunden, wobei auf einer zuvor an den Kunden auf einen Bildschirm ausgegebenen Netzwerkseite eine Werbeaktion dargestellt wird, die das Produkt oder den Anbieter selbst bewirbt, der Kunde einen entsprechenden als Teil der Werbeaktion an den Kunden ausgegebenen Link anklickt und dadurch automatisch über eine VoIP-Telekommunikationsverbindung mit einem Server verbunden wird, der die VolP-Telekommunikationsverbindung an den Anbieter weitervermittelt, um die Bestellung aufzugeben, wobei eine eindeutige Kennung der Werbeaktion zur Bewertung der Werbeaktion an den Server übertragen wird und die eindeutige Kennung automatisch an den Server übermittelt wird, und wobei die an den Kunden auf einem Bildschirm ausgegebenen Netzwerkseite mit der Werbeaktion in Abhängigkeit von einem Suchwort einer Suchmaschine dynamisch generiert wird.

Ausgehend von dem aus dieser Druckschrift bekannten Verfahren bzw. dem aus dieser Druckschrift bekannten Server liegt der vorliegenden Erfindung die Aufgabe zugrunde, die Bewertung von Werbeaktionen unter Ausnutzung eines Trackingsystems zu vereinfachen und zu beschleunigen.

Zur Lösung dieser Aufgabe wird ein Verfahren gemäß Anspruch 1 bzw. ein Server gemäß Anspruch 14 vorgeschlagen.

Ganz wesentlich für die Realisierung der vorliegenden Erfindung ist es, dass der Server die Fähigkeit und die entsprechenden Mittel aufweist, diejenige Werbeaktion eindeutig zu identifizieren, die den Ursprung eines Anrufs eines Kunden darstellt. Das ist diejenige Werbeaktion, die bspw. in einem Printmedium, in einer Fernsehsendung oder auf einer Internetseite dargestellt wird. Die Identifikation der Werbeaktion erfolgt anhand einer eindeutigen Kennung der Werbeaktion. Diese Kennung kann entweder selbst Informationen über die Werbeaktion enthalten oder als Grundlage für das Beschaffen von Informationen über die Werbeaktion dienen. Diese Informationen werden von dem Server nach Eingang des Anrufs über die Kennung entweder direkt oder indirekt ermittelt. Die Informationen umfassen bspw. einen Namen und ein Erscheinungsdatum eines Printmediums, insbesondere einer Zeitschrift, in dem die Werbeaktion erschienen ist, einen Namen und ein Ausstrahlungsdatum einer Fernsehsendung, in der die Werbeaktion erschienen ist, oder einen Namen und ein Schlüsselwort einer in Abhängigkeit von dem Schlüsselwort dynamisch generierten Internetseite, auf der die Werbeaktion erschienen ist.

Zur Identifikation der Werbeaktion kann bspw. die gewählte Telefonnummer ausgewertet werden. So ist es bspw. denkbar, dass die gewählte Telefonnummer aus einem ersten Teil, durch den der Server angesprochen bzw. angewählt wird, und einem zweiten Teil besteht, der die eindeutige Kennung (z.B. eine Zahlenkombination) der Werbeaktion darstellt. Ebenso ist es denkbar, dass über die Telefonnummer der Server angesprochen bzw. angewählt wird, und der Kunde nach erfolgtem Verbindungsaufbau zu dem Server noch die eindeutige Kennung (z.B. eine Zahlen- oder Buchstabenkombination) der Werbeaktion eingibt. Diese eindeutige Kennung kann auch direkt in der Artikelnummer des beworbenen Produkts hinterlegt sein, so dass durch Eingabe von Angaben über das beworbene Produkt, eine eindeutige Identifikation der entsprechenden Werbeaktion möglich ist. Die eindeutige Kennung der Werbeaktion kann ebenso wie die eigentliche Werbeaktion statisch sein oder könnte auch in Abhängigkeit von Datum, Uhrzeit und/oder Schlüsselworten (Suchworte einer Suchmaschine) dynamisch generiert werden.

In der Kennung können zusätzliche Informationen betreffend die Werbeaktion, wie bspw. Erscheinungsdatum, Erscheinungsort, Größe der Anzeige, etc., enthalten sein. Es ist aber auch denkbar, anhand der Kennung aus einer Datenbank, auf die der Server Zugriff hat, dort hinterlegte weitere Informationen über die Werbeaktion zu entnehmen und zur Weiterverarbeitung heranzuziehen.

Gemäß der vorliegenden Erfindung erhält der Server also einen Anruf, ermittelt eine eindeutige Kennung der vorausgegangenen Werbeaktion und entsprechende Informationen zu der Werbeaktion, bewertet die Werbeaktion oder gibt die eindeutige Kennung bzw. die Informationen an einen dem Anbieter zugeordneten Tracking-Server zur Bewertung weiter, und vermittelt die Telefonverbindung schließlich weiter an den Anbieter bzw. an einen weiteren Server des Anbieters. Die Erfindung funktioniert sowohl bei Anrufen über eine PSTN-Verbindung als auch bei Anrufen über eine VoIP-Verbindung.

Gemäß einer vorteilhaften Weiterbildung der vorliegenden Erfindung wird vorgeschlagen, dass der Server Teil des Tracking-Systems ist. Falls der Server rein softwaremäßig realisiert ist und keine eigene Hardware umfasst, wäre es möglich, den Server als Software, die auf einem Rechner des Tracking-Systems abläuft, zu realisieren. Alternativ wäre es denkbar, dass ein und derselbe Server für mehrere Tracking-Systeme, die unterschiedlichen Anbietern zugeordnete sein können, zuständig ist. Das könnte bspw. dadurch realisiert werden ,dass die von dem Server ermittelten Informationen bezüglich der Werbeaktion auch Informationen über den Anbieter des Produkts umfassen. In dem Server kann eine Liste mit Anbietern und entsprechenden Tracking-Systemen abgelegt sein, auf die zugegriffen werden kann. So erhält der Server zu jedem Anruf bzw. zu jeder Werbeaktion das zuständige Tracking-System des Anbieters und kann die Informationen zur Bewertung der Werbeaktion an das zuständige Tracking-System weiterleiten.

Gemäß einer bevorzugten Ausführungsform der Erfindung wird vorgeschlagen, dass der Server Mittel aufweist, um die Gesamtzahl der über eine einer bestimmten Werbeaktion zugeordnete Telefonnummer aufgebauten Telekommunikationsverbindungen zu ermitteln. Vorteilhafterweise weist der Server Mittel auf, um die Gesamtzahl der Telekommunikationsverbindungen in einen Bezug zu den entsprechenden Werbeausgaben für die Werbeaktion zu setzen. Dabei wird davon ausgegangen, dass eine Werbeaktion umso erfolgreicher ist, je mehr Telekommunikationsverbindungen von ihr aus aufgebaut werden. Ob der Aufbau der Telekommunikationsverbindung dann letztlich zu einer Bestellung des beworbenen Produkts führt, ist hier noch nicht von Bedeutung.

Gemäß einer anderen bevorzugten Ausführungsform der Erfindung wird vorgeschlagen, dass der Server Mittel aufweist, um die Dauer der einzelnen über eine einer bestimmten Werbeaktion zugeordnete Telefonnummer aufgebauten Telekommunikationsverbindungen zu ermitteln. Vorteilhafterweise weist der Server Mittel auf, um die durchschnittliche Dauer der über die der Werbeaktion zugeordnete Telefonnummer aufgebauten Telekommunikationsverbindungen zu ermitteln. Vorzugsweise weist der Server Mittel auf, um die Dauer der einzelnen Telekommunikationsverbindungen und/oder die durchschnittliche Dauer der Telekommunikationsverbindungen in einen Bezug zu den entsprechenden Werbeausgaben für die Werbeaktion zu setzen. Dabei wird davon ausgegangen, dass eine Werbeaktion umso erfolgreicher ist, desto länger die von ihr aus aufgebaute Telekommunikationsverbindung dauert. Es wird angenommen, dass die Wahrscheinlichkeit, dass eine lange Verbindung zu einer Bestellung des Produkts geführt hat, deutlich höher ist als bei einer kurzen Telekommunikationsverbindung.

Gemäß einer weiteren bevorzugten Ausführungsform der Erfindung wird vorgeschlagen, dass der Server Mittel aufweist, um die Telekommunikationsverbindung bis zu einer tatsächlich erfolgten Bestellung des Produkts bei dem Anbieter zu verfolgen. Zu diesem Zweck werden nach erfolgter Bestellung von einem Rechner des Anbieters Informationen bzgl. der erfolgten Bestellung an das dem Anbieter zugeordnete Tracking-System übermittelt und dort ausgewertet, d.h. in die Bewertung der Werbeaktion mit einbezogen. Vorteilhafterweise weist der Server Mittel auf, um die Anzahl der tatsächlich erfolgten Bestellungen in einen Bezug zu den Werbeausgaben für die entsprechende Werbeaktion zu setzen. Diese Ausführungsform ist zwar relativ aufwendig zu realisieren, liefert aber die genaueste und zuverlässigste Aussage über den Erfolg einer Werbeaktion.

Gemäß einer anderen vorteilhaften Weiterbildung der Erfindung wird vorgeschlagen, dass der Server Mittel aufweist, um in Abhängigkeit von dem Ergebnis der Bewertung der Werbeaktion, die Werbeaktion automatisch zu verlängern, zu ändern oder zu kündigen. Dies kann bspw. durch das automatische Versenden von geeigneten elektronischen Nachrichten (sog. E-Mails) an die Herausgeber von Printmedien oder Fernsehsendungen oder die Betreiber von Internetseiten erfolgen (die sog. Werbepartner). Zum Ändern der Werbeaktion ist es denkbar, dass die Werbeaktion z.B. in Printmedien anders platziert oder vom Format her geändert wird. Ebenfalls denkbar ist es, dass die Werbeaktion z.B. im Internet mit anderen Schlüsselworten verknüpft wird, das heißt es werden bspw. bei dem Betreiber einer Suchmaschine andere Suchworte gebucht, bei deren Eingabe die Werbeaktion auf der von der Suchmaschine dynamisch generierten Netzwerkseite (sog. Trefferliste) dargestellt wird.

Gemäß einer weiteren bevorzugten Ausführungsform der Erfindung wird vorgeschlagen, dass die Mittel zum Ermitteln der Information über die Werbeaktion, diese Information anhand der gewählten Telefonnummer ermitteln. Vorzugsweise extrahieren die Mittel zum Ermitteln der Information über die Werbeaktion aus der gewählten Telefonnummer eine eindeutige Kennung der Werbeaktion und entnehmen aus einer Datenbank die der Kennung zugeordnete Information.

Gemäß noch einer weiteren bevorzugten Ausführungsform der Erfindung wird vorgeschlagen, dass die Mittel zum Ermitteln der Information über die Werbeaktion, eine an den Server übermittelte eindeutige Kennung (ID) der Werbeaktion empfangen und aus einer Datenbank die der Kennung zugeordnete Information entnehmen. Diese eindeutige Kennung der Werbeaktion kann bspw. von dem Kunden in Form einer aus der Werbeaktion bekannten Kennung oder Artikelnummer mit integrierter Kennung eingegeben und an den Server übermittelt werden.

Gemäß der Erfindung wird vorgeschlagen, dass der Server ein Internetserver ist, der von dem Kunden durch Anklicken eines entsprechenden als Teil der Werbeaktion an den Kunden ausgegebenen Verweises auf den Server über eine Voice-over-IP (VoIP)-Verbindung anwählbar ist.

Weitere Vorteile und besondere Ausführungsformen der Erfindung werden nachfolgend anhand der Figuren näher erläutert. Es zeigen:
- Fig. 1: ein erstes Beispiel einer Anordnung ; und
- Fig. 2: ein Ausführungsbeispiel einer Anordnung zur Realisierung der vorliegenden Erfindung.

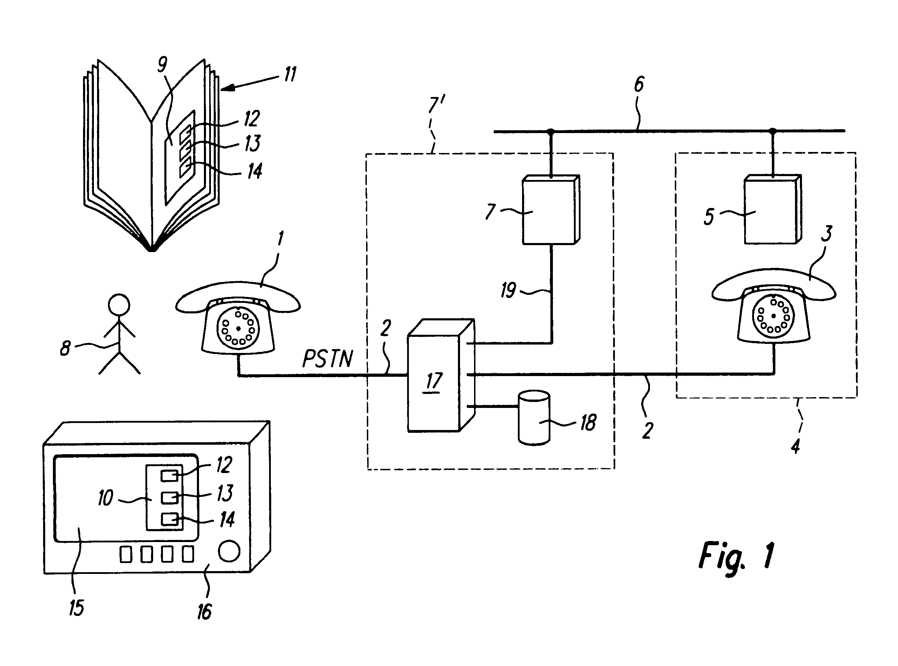

In Figur 1 ist ein erstes Beispiel einer Anordnung. Die Anordnung umfasst ein herkömmliches analoges oder digitales Telefon 1, das über eine sogenannte Public Switched Telephone Network (PSTN)-Verbindung 2 mit einem ebenfalls herkömmlichen analogen oder digitalen Telefon 3 eines Anbieters 4 von bestimmten Waren und/oder Dienstleistungen in Verbindung steht. Der Anbieter 4 umfasst außerdem einen Internetserver 5, der mit einem Client-Server-Netzwerk, bspw. dem Internet 6, in Verbindung steht. Bei dem Anbieter 4 können telefonisch entweder über das Telefon 3 oder über das Internet 6 und den Internetserver 5 bestimmte Produkte bestellt werden. Zum Überwachen und Auswerten der Bestellungen bei dem Anbieter 4 ist diesem ein sogenanntes Tracking-System 7 zugeordnet, das ebenfalls an das Internet 6 angeschlossen ist. Der Anbieter 4 bzw. der Internetserver 5 übermittelt über das Internet 6 an das Tracking-System 7 zumindest Informationen betreffend der bei dem Anbieter 4 bestellten Produkte. Auf diese Weise ist es dem Tracking-System 7 möglich, den Abverkauf von Waren und Dienstleistungen durch den Anbieter 4 zu verfolgen und auszuwerten.

Das Telefon 1 ist einem Kunden 8 zugeordnet, der bei dem Anbieter 4 Produkte bestellen kann. Der Kunde 8 erhält Informationen über ein Produkt des Anbieters 4 bzw. über den Anbieter 4 selbst aus einer Werbeaktion 9, 10. Die Werbeaktion ist beispielsweise eine Werbeanzeige 9 in einer Zeitschrift 11. Die Werbeanzeige 9 umfasst Informationen 12 über das beworbene Produkt bzw. den Anbieter 4 und eine Telefonnummer 13, über die das beworbene Produkt mittels des Telefons 1 bei dem Anbieter 4 bestellt werden kann. Zusätzlich kann die Werbeanzeige 9 noch eine eindeutige Kennung (Identifikation, ID) 14 der Werbeanzeige 9 enthalten.

Die Werbeaktion kann aber auch eine Werbesendung 10 sein, die dem Kunden 9 auf einem Bildschirm 15 eines Fernsehers 16 präsentiert wird. Auch die Werbesendung 10 umfasst Informationen 12 über das beworbene Produkt bzw. den Anbieter 4 und eine Telefonnummer 13, über die das beworbene Produkt mittels des Telefons 1 beim Anbieter 4 bestellt werden kann. Wahlweise kann die Werbesendung 10 zusätzlich noch eine eindeutige Kennung 14 der Werbesendung 10 aufweisen.

Zwischen dem ersten Telefon 1, das dem Kunden 8 zugeordnet ist, und dem zweiten Telefon 3, das dem Anbieter 4 zugeordnet ist, ist erfindungsgemäß ein Telefonserver 17 angeordnet, so dass die PSTN-Verbindung 2 durch den Server 17 hindurch verläuft. Der Server 17 hat Zugriff auf eine Datenbank 18, in der Informationen bzw. zusätzliche Informationen zu den Werbeaktionen 9, 10 abgelegt sind. Während beispielsweise die eindeutige Kennung 14 der Werbeaktion 9, 10 lediglich eine bestimmte Zahlen- oder Buchstabenkombination umfasst, können zu dieser Kennung 14 in der Datenbank 18 alle weiteren Informationen über die Werbeaktion 9, 10, wie beispielsweise Namen der Zeitschrift 11 oder der Fernsehsendung, Erscheinungsdatum der Zeitschrift 11 oder Ausstrahlungsdatum der Fernsehsendung, enthalten sein.

Zudem steht der Server 17 über eine Datenübertragungsverbindung 19 mit dem Tracking-System 7 in Verbindung. Die Datenübertragungsverbindung 19 kann als eine separate Leitung oder als eine Verbindung über das Internet 6 ausgebildet sein, wobei der Server 17 dann ebenfalls an das Internet 6 angeschlossen sein muss. Selbstverständlich ist es denkbar, dass die Telefonnummer 13 und die Kennung 14 der Werbeaktion 9, 10 zu einer gemeinsamen Nummer zusammengefasst sind. So könnte bspw. eine Nummer 01234-567-89 zum einen eine Telefonnummer (01234-567) zur Anwahl des Servers 17 über die PSTN-Verbindung 2 umfassen. Nach dem Verbindungsaufbau zu dem Server 17 kann dieser dann anhand der Nebenstellennummer (89), die eine eindeutige Kennung der Werbeaktion 9, 10 darstellt, die Werbeaktion identifizieren.

Über den Server 17 ist es erstmals möglich, Werbeaktionen 9, 10 einerseits mit ausgelöst durch die Werbeaktionen 9, 10 aufgebauten Telekommunikationsverbindungen über die PSTN-Verbindung 2 von dem Kunden 8 zu dem Anbieter 4 andererseits in Bezug zu setzen und den Erfolg der Werbeaktionen 9, 10 auszuwerten. Auf diese Weise ist es möglich, ineffiziente Werbeaktionen 9, 10 zu identifizieren und ggf. derart zu verändern, dass sie erfolgreicher werden, oder ganz abzuschalten. Auf diese Weise ist es insbesondere bei Printmedien möglich, Rohstoffe zu sparen und damit die Umwelt zu schonen, indem auf die Herstellung und Verteilung von ineffizienten Werbeaktionen 9 verzichtet wird. Die vorliegende Erfindung kann also nicht nur einen deutlichen Fortschritt bezüglich einer effizienteren Ausgabe eines vorgegebenen Werbeetats für Werbeaktionen 9, 10 bewirken, sondern führt gleichzeitig zu einer Schonung der Umwelt und Einsparung von Ressourcen. Insofern leistet die Erfindung einen wichtigen Beitrag für die Zukunft.

Wenn der Kunde 8 nun ausgelöst durch die Werbeanpreisungen der Werbeaktionen 9, 10 das beworbene Produkt bei dem Anbieter 4 bestellen möchte, wählt er zunächst mittels des Telefons 1 die in der Werbeaktion 9, 10 angegebene Telefonnummer 13. Durch die Anwahl der Telefonnummer 13 wird das Telefon 1 zunächst über einen ersten Teil der PSTN-Verbindung 2 mit dem Telefonserver 17 verbunden. In dem Server 17 sind Mittel vorgesehen, durch die eine Information bezüglich der Werbeaktion 9, 10 ermittelt werden kann. Beispielsweise umfasst die Information den Namen und das Erscheinungsdatum der Zeitschrift 11 oder den Namen und das Ausstrahlungsdatum einer Fernsehsendung, in der die Werbesendung 10 erschienen ist. Diese Information ermöglicht insbesondere eine eindeutige Identifikation und eine zuverlässige umfangreiche Bewertung der Werbeaktion 9, 10.

Die Informationen können beispielsweise in Form der Kennung 14 durch den Kunden 8 mittels des Telefons 1 eingegeben und an den Server 17 übermittelt werden. Es ist auch denkbar, dass der Server 17 diese Information aus der gewählten Telefonnummer 13 und der darin enthaltenen Identifikation 14 selbständig extrahiert. Die wichtigsten Informationen über die Werbeaktion 9, 10 können in der Kennung 14 selbst enthalten sein. Es ist aber auch denkbar, dass die Kennung 14 den Server 17 veranlasst, entsprechende Informationen über die Werbeaktion 9, 10 aus der Datenbank 18 zu laden. Dies hat den Vorteil, dass die Kennung 14 relativ kurz gehalten werden kann und trotzdem nahezu beliebig viele Informationen aus der Datenbank 18 geladen werden können und damit zur Bewertung der Werbeaktion 9, 10 zur Verfügung stehen.

In dem Telefonserver 17 sind darüber hinaus Mittel vorgesehen, um die Information über die Werbeaktion 9, 10 hinsichtlich einer Bewertung der Werbeaktion 9, 10 auszuwerten. Das Ergebnis der Bewertung kann dann über die Datenübertragungsverbindung 19 an das Tracking-System 7 übermittelt werden. Alternativ sind in dem Server 17 Mittel vorgesehen, um die Informationen über die Werbeaktion 9, 10 zur weiteren Auswertung hinsichtlich einer Bewertung der Werbeaktion 9, 10 über die Datenübertragungsverbindung 19 an das Tracking-System 7 weiterzuleiten. In diesem Fall erfolgt die Bewertung der Werbeaktion 9, 10 dann in dem Tracking-System 7. Schließlich sind in dem Telefonserver 17 Mittel vorgesehen, um die Telekommunikationsverbindung von dem Telefon 1 über den zweiten Teil der PSTN-Verbindung 2 an das Telefon 3 des Anbieters 4 weiter zu vermitteln.

Darüber hinaus können noch weitere Informationen, die zur Bewertung der Werbeaktion 9, 10 herangezogen werden, an das Tracking-System 7 bzw. den Telefonserver 17 übermittelt werden. So ist es bspw. denkbar, dass in dem Server 17 Mittel vorgesehen sind, um die absolute oder durchschnittliche Dauer der von einer bestimmten Werbeaktion 9, 10 aus aufgebauten Telekommunikationsverbindungen zu erfassen. Diese Informationen können über die Datenübertragungsverbindung 19 zur weiteren Verarbeitung an das Tracking-System 7 übermittelt oder in dem Telefonserver 17 selbst zur Bewertung der Werbeaktion 9, 10 verarbeitet werden. Ebenso ist es denkbar, dass der Anbieter 4 bzw. der Internetserver 5 nach einer erfolgten Bestellung eines Produkts über das Internet 6 Informationen über die Bestellung an das Tracking-System 7 übermitteln. Auf diese Weise kann festgestellt werden, welche der von einer bestimmten Werbeaktion 9, 10 aus aufgebauten Telekommunikationsverbindungen tatsächlich zur Bestellung eines Produkts geführt hat.

Ein Anruf des Kunden 8 bei dem Anbieter 4 wird also nicht direkt an das Telefon 3 des Anbieters 4 geleitet, sondern geht zunächst über den Telefonserver 17 und wird erst nach einer eindeutigen Identifikation der Werbeaktion 9, 10 und gegebenenfalls einer Bewertung der Werbeaktion 9, 10 in dem Server 17 an das Telefon 3 des Anbieters 4 weitergeleitet. Die Bewertung der Werbeaktion 9, 10 kann jedoch auch nach erfolgter Weiterleitung des Anrufs an den Anbieter 4 erfolgen. Danach kann dann der Kunde 8 wie üblich über die Telekommunikationsverbindung zwischen dem Telefon 1 und dem Telefon 3 bei dem Anbieter 4 das gewünschte Produkt bestellen.

Es ist denkbar, dass der Telefonserver 17 Teil des Tracking-Systems 7 ist. Die Gesamtheit eines solchen Tracking-Systems ist in Figur 1 mit dem Bezugszeichen 7' bezeichnet und umfasst den Internetserver 7 und den Telefonserver 17, die über die Datenübertragungsverbindung 19 miteinander in Verbindung stehen. Falls der Server 17 rein softwaremäßig ausgebildet ist, kann die Software des Servers 17 auch auf dem Internetserver 7 ablaufen.

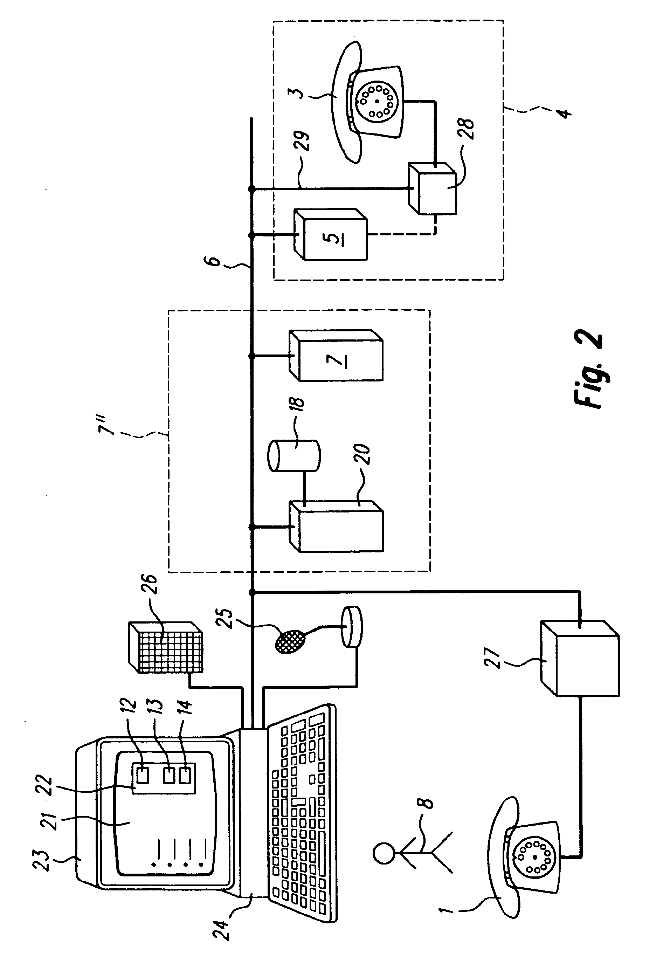

In Figur 2 ist eine Ausführungsform einer erfindungsgemäßen Anordnung zur Realisierung der vorliegenden Erfindung dargestellt. Diese Ausführungsform unterscheidet sich von dem Beispiel aus Figur 1 insbesondere dadurch, dass der Server nicht als ein Telefonserver 17, sondern als ein Internetserver 20 ausgebildet ist, der an das Internet 6 angeschlossen ist. In diesem Fall erfolgt die Datenübertragung zwischen dem Internet-Server 20 und dem Tracking-System 7 vorzugsweise über das Internet 6. Auch bei diesem Ausführungsbeispiel kann der Internetserver 20 Teil des Tracking-Systems 7 sein. Ein solches Tracking-System ist in Figur 2 in seiner Gesamtheit mit dem Bezugszeichen 7" bezeichnet und umfasst neben dem Internetserver 7 des Tracking-Systems auch den erfindungsgemäßen Internetserver 20. In diesem Fall würde die Datenübertragung zwischen dem Internet-Server 20 und dem Tracking-System 7 vorzugsweise nicht über das Internet 6, sondern über eine separate Datenübertragungsverbindung (nicht dargestellt) erfolgen.

Außerdem ist in diesem Ausführungsbeispiel die Werbeaktion als ein auf einer Netzwerkseite 21 dargestellter Werbebanner 22 ausgebildet. Die Netzwerkseite 21 wird beispielsweise von einer Suchmaschine als Antwort auf eine Suchanfrage nach einem bestimmten Suchwort in Form einer Trefferliste dynamisch generiert und mittels eines Browsers auf einem Bildschirm 23 eines Computers 24 des Kunden 8 ausgegeben. Der Computer 24 ist außerdem an das Internet 6 angeschlossen und verfügt des weiteren über ein Mikrofon 25, einen Lautsprecher 26 und geeignete Mittel, so dass er von dem Kunden 8 zur Internet-Telefonie genutzt werden kann. Das dem Kunden 8 zugeordnete Telefon 1 ist über einen geeigneten Apparat 27 ebenfalls an das Internet 6 angeschlossen. Ebenso ist das dem Anbieter 4 zugeordnete Telefon 3 über einen entsprechenden Apparat 28 und eine Verbindung 29 an das Internet 6 angeschlossen. Es ist denkbar, dass der Apparat 28 nicht unmittelbar, sondern mittelbar über den Internetserver 5 an das Internet 6 angeschlossen ist (gestrichelte Linie statt der Verbindung 29) .

Wenn der Kunde 8 nun bei dem Ausführungsbeispiel aus Figur 2 veranlasst durch das Werbebanner 22 bei dem Anbieter 4 das beworbene Produkt bestellen möchte, stellt er beispielsweise mittels des Telefons 1 über das Internet 6 eine Voice-Over-Internet-Protocol (VoIP)-Verbindung zu dem Internetserver 20 her. Dazu wählt er die in dem Werbebanner 22 dargestellte Telefonnummer 13 mit dem Telefon 1. Die gewählte Telefonnummer 13 wird von dem Apparat 27 empfangen, der daraufhin nach einem bestimmten Protokoll eine entsprechende VoIP-Verbindung über das Internet 6 zu dem Internetserver 20 aufbaut. Alternativ kann der Kunde 8 die Telefonnummer 13 auch über eine Tastatur des Computers 24 eingeben, wobei dann der Computer 24 die Funktion des Apparats 27 übernimmt und eine geeignete VoIP-Verbindung über das Internet 6 zu dem Internetserver 20 aufbaut. Selbstverständlich ist es auch möglich, dass das Werbebanner 22 einen Verweis (sogenannten Hyperlink) zu dem Internetserver 20 enthält, so dass durch einfaches Anklicken des Verweises die gewünschte VoIP-Verbindung zu dem Internetserver 20 hergestellt werden kann.

Wie oben bereits für den Telefonserver 17 beschrieben, weist auch der Internetserver 20 entsprechende Mittel auf und führt geeignete Schritte aus, um die Werbeaktion 22 eindeutig identifizieren zu können und um Informationen bezüglich der Werbeaktion 22 zu ermitteln. Diese Informationen können entweder über das Internet 6 an das Tracking-System 7 zur Bewertung der Werbeaktion 22 übermittelt werden oder aber in dem Internetserver 20 selbst bewertet werden, wobei dann das Ergebnis der Bewertung über das Internet 6 an das Tracking-System 7 übermittelt wird. Nach der eindeutigen Identifikation der Werbeaktion 22 durch den Internetserver 20 wird die VoIP-Telekommunikationsverbindung über das Internet 6 und den Apparat 28 an das dem Anbieter 4 zugeordnete Telefon 3 weitervermittelt. Anschließend kann der Kunde 8 in gewohnter Weise über die VoIP-Verbindung zwischen dem Computer 24 und dem Telefon 3 bzw. dem Telefon 1 und dem Telefon 3 das gewünschte Produkt telefonisch bestellen.

## Patentansprüche

1. Verfahren zum Bestellen eines Produkts bei einem Anbieter (4) durch einen Kunden (8), wobei auf einer zuvor an den Kunden (8) auf einen Bildschirm ausgegebenen Netzwerkseite (21) eine Werbeaktion (22) dargestellt wird, die das Produkt oder den Anbieter (4) selbst bewirbt, der Kunde (8) einen entsprechenden als Teil der Werbeaktion (22) an den Kunden ausgegebenen Link anklickt und **dadurch** automatisch über eine VoIP-Telekommunikationsverbindung mit einem Server (20) verbunden wird, der die VolP-Telekommunikationsverbindung an den Anbieter (4) weitervermittelt, um die Bestellung aufzugeben, wobei eine eindeutige Kennung (14) der Werbeaktion zur Bewertung der Werbeaktion (22) an den Server (20) übertragen wird und die eindeutige Kennung (14) automatisch an den Server (20) übermittelt wird, und wobei die an den Kunden (8) auf einem Bildschirm ausgegebenen Netzwerkseite (21) mit der Werbeaktion (22) in Abhängigkeit von einem Suchwort einer Suchmaschine dynamisch generiert wird,
**dadurch gekennzeichnet,**
**dass** der Server (20) automatisch eine der Kennung (14) zugeordnete Information über die Werbeaktion (22) aus einer Datenbank (18) entnimmt und diese zur Bewertung
der Werbeaktion (22) an ein Tracking-System (7) weiterleitet, wobei die Information über die Werbeaktion (22) einen Namen und/oder das Suchwort umfasst.

2. Verfahren nach Anspruch 1, **dadurch gekennzeichnet, dass** durch Anklicken der Verknüpfung durch den Kunden (8) automatisch eine VoIP-Verbindung zu dem Server (20) hergestellt wird und dieser die VoIP-Verbindung dann zur Bestellung des Produkts an den Anbieter (4) weiterleitet.

3. Verfahren nach Anspruch 1 oder 2, **dadurch gekennzeichnet, dass** die eindeutige Kennung (14) über die VoIP-Verbindung an den Server (20) übermittelt wird, dieser die Information über die Werbeaktion (22) aus der Datenbank (18) ausliest und diese zur Bewertung der Werbeaktion (22) an ein Tracking-System (7) weiterleitet.

4. Verfahren nach Anspruch 1 oder 2, **dadurch gekennzeichnet, dass** die eindeutige Kennung (14) über die VoIP-Verbindung an den Server (20) übermittelt wird, dieser die Information über die Werbeaktion (22) aus der Datenbank (18) ausliest und diese automatisch an einen Server eines Tracking-Systems (7) zur Bewertung der Werbeaktion (22) übermittelt.

5. Verfahren nach einem der Ansprüche 1 bis 4, **dadurch gekennzeichnet, dass** der Server (20) oder der Server eines Tracking-Systems (7) in Abhängigkeit von dem Ergebnis der Bewertung der Werbeaktion (22), automatisch eine Verlängerung, Änderung oder Kündigung der Werbeaktion (22) veranlasst.

6. Verfahren nach einem der Ansprüche 1 bis 5, **dadurch gekennzeichnet, dass** der Server (20) oder der Server eines Tracking-Systems (7) die Gesamtzahl der über eine der Werbeaktion (22) zugeordnete Telefonnummer (13) aufgebauten VoIP-Verbindungen ermittelt.

7. Verfahren nach Anspruch 6, **dadurch gekennzeichnet, dass** der Server (20) oder der Server eines Tracking-Systems (7) die Gesamtzahl der VoIP-Verbindungen in einen Bezug zu den Werbeausgaben für die Werbeaktion (22) setzt.

8. Verfahren nach einem der Ansprüche 1 bis 7, **dadurch gekennzeichnet, dass** der Server (20) oder der Server eines Tracking-Systems (7) die Dauer der einzelnen über eine der Werbeaktion (22) zugeordnete Telefonnummer (13) aufgebauten VoIP-Verbindungen ermittelt.

9. Verfahren nach Anspruch 8, **dadurch gekennzeichnet, dass** der Server (20) oder der Server eines Tracking-Systems (7) die durchschnittliche Dauer der einzelnen über eine der Werbeaktion (22) zugeordnete Telefonnummer (13) aufgebauten VoIP-Verbindungen ermittelt.

10. Verfahren nach Anspruch 8 oder 9, **dadurch gekennzeichnet, dass** der Server (20) oder der Server eines Tracking-Systems (7) die Dauer bzw. die durchschnittliche Dauer der VoIP-Verbindungen in einen Bezug zu den Werbeausgaben für die Werbeaktion (22) setzt.

11. Verfahren nach einem der Ansprüche 1 bis 10, **dadurch gekennzeichnet, dass** der Server (20) oder der Server eines Tracking-Systems (7) zur Ermittlung der Trackinginformationen die VoIP-Verbindungen bis zum Zeitpunkt einer tatsächlich erfolgten Bestellung des Produkts bei dem Anbieter (4) verfolgt.

12. Verfahren nach Anspruch 11, **dadurch gekennzeichnet, dass** der Server (20) oder der Server eines Tracking-Systems (7) die Anzahl der durch die Werbeaktion (22) ausgelösten tatsächlich erfolgten Bestellungen in einen Bezug zu den Werbeausgaben für die Werbeaktion (22) setzt.

13. Verfahren nach einem der Ansprüche 1 bis 12, **dadurch gekennzeichnet, dass** der Server (20) oder der Server eines Tracking-Systems (7) aus der gewählten Telefonnummer (13) der VoIP-Verbindung die eindeutige Kennung (14) der Werbeaktion (22) extrahiert.

14. Server (20), der von einem Kunden (8) über eine Telekommunikationsverbindung anwählbar ist, mit Mitteln, um die Telekommunikationsverbindung an einen Anbieter (4) zur Bestellung eines Produkts weiter zu vermitteln, mit Mitteln zum Empfang einer eindeutigen Kennung (14) einer an den Kunden (8) über eine Netzwerkseite (21) ausgegebenen Werbeaktion (22), die das Produkt oder den Anbieter (4) selbst bewirbt, zur Bewertung der Werbeaktion (22),
**dadurch gekennzeichnet, dass** der Server (20) zugriff auf eine Datenbank (18) hat, in der die eindeutige Kennung (14) der Werbeaktion (22) und eine der Kennung (14) zugeordnete Information der Werbeaktion (22) abgelegt ist, und der Server (20) Mittel zum automatischen Auslesen der zugeordneten Information über die Werbeaktion (22) aus der Datenbank (18) und Mittel zur Bewertung der Werbeaktion (22) aufweist, indem er die ausgelesene Information an ein Tracking-System (7) weiterleitet, wobei die Information über die Werbeaktion (22) einen Namen und/oder ein Suchwort einer Suchmaschine einer zuvor in Abhängigkeit von dem Suchwort dynamisch generierten Netzwerkseite (21) mit der Werbeaktion (22) umfasst.

## Claims

1. Method for ordering a product from a supplier (4) by a customer (8), wherein an advertising action (22) is displayed on a network site (21) which was previously output to the customer (8) on a screen, said advertising action advertising the product or the supplier (4) itself, the customer (8) clicks on an appropriate link which has been output to the customer as part of the advertising action (22) and is thereby automatically connected via a VoIP telecommunications connection to a server (20) which transfers the VoIP telecommunications connection to the supplier (4) in order to place the order, wherein a unique identification (14) of the advertising action is transmitted to the server (20) in order to evaluate the advertising action (22) and the unique identification (14) is automatically transmitted to the server (20) and wherein the network site (21) with the advertising action (22) which is output to the customer (8) on a screen is generated dynamically depending on a search word of a search engine, **characterised in that** the server (20) automatically withdraws information assigned to the identification (14) and concerning the advertising action (22) from a database (18) and passes on said information to a tracking system (7) for evaluation of the advertising action (22), wherein the information concerning the advertising action (22) comprises a name and/or the search word.

2. Method according to claim 1, **characterised in that** a VoIP connection to the server (20) is established automatically when the customer (8) clicks on the link and said server (20) then transfers the VoIP connection to the supplier (4) in order to order the product.

3. Method according to claim 1 or 2, **characterised in that** the unique identification (14) is transmitted via the VoIP connection to the server (20), the server (20) reads the information concerning the advertising action (22) from the database (18) and passes on said information to a tracking system (7) for evaluation of the advertising action (22).

4. Method according to claim 1 or 2, **characterised in that** the unique identification (14) is transmitted via the VoIP connection to the server (20), the server (20) reads the information concerning the advertising action (22) from the database (18) and automatically passes on said information to a server of a tracking system (7) for evaluation of the advertising action (22).

5. Method according to one of the claims 1 to 4, **characterised in that**, depending on the result of the evaluation of the advertising action (22), the server (20) or the server of a tracking system (7) automatically initiates an extension, amendment or cancellation of the advertising action (22).

6. Method according to one of the claims 1 to 5, **characterised in that** the server (20) or the server of a tracking system (7) determines the total number of VoIP connections established via a telephone number (13) associated with the advertising action (22).

7. Method according to claim 6, **characterised in that** the server (20) or the server of a tracking system (7) places the total number of VoIP connections in relation to the advertising expenditure for the advertising action (22).

8. Method according to one of the claims 1 to 7, **characterised in that** the server (20) or the server of a tracking system (7) determines the duration of the individual VoIP connections established via a telephone number (13) associated with the advertising action (22).

9. Method according to claim 8, **characterised in that** the server (20) or the server of a tracking system (7) determines the mean duration of the individual VoIP connections established via a telephone number (13) associated with the advertising action (22).

10. Method according to claim 8 or 9, **characterised in that** the server (20) or the server of a tracking system (7) sets the durations and/or the mean durations of the VoIP connections in a relation to the advertising expenditure for the advertising action (22).

11. Method according to one of the claims 1 to 10, **characterised in that**, in order to determine the tracking information, the server (20) or the server of a tracking system (7) tracks the VoIP connections until the time when an actual order for the product is placed with the supplier (4).

12. Method according to claim 11, **characterised in that** the server (20) or the server of a tracking system (7) sets the number of actually placed orders initiated by the advertising action (22) in relation to the advertising expenditure for the advertising action (22).

13. Method according to one of the claims 1 to 12, **characterised in that** the server (20) or the server of a tracking system (7) extracts the unique identification (14) of the advertising action (22) from the dialled telephone number (13) of the VoIP connection.

14. Server (20), which can be dialled by a customer (8) via a telecommunications connection, said server comprising means for transferring the telecommunications connection to a supplier (4) in order to order a product, and means for receiving a unique identification (14) of an advertising action (22) output to the customer (8) via a network site (21), said advertising action (22) advertising the product or the supplier (4) itself, in order to evaluate the advertising action (22), **characterised in that** the server (20) has access to a database (18) wherein a unique identification (14) of the advertising action (22) and information assigned to the identification (14) of the advertising action (22) is stored, and the server (20) has means for automatically reading the assigned information concerning the advertising action (22) from the database (18) and means for evaluating the advertising action (22) **in that** said means passes on the read-out information to a tracking system (7), wherein the information concerning the advertising action (22) comprises a name and/or a search word of a search engine of a network site (21) with the advertising action (22), said network site having previously been generated dynamically depending on the search word.

## Revendications

1. Procédé permettant la commande d'un produit auprès d'un fournisseur (4) par un client (8), dans lequel une action publicitaire (22) est affichée sur une page réseau (21) délivrée au préalable au client (8) sur un écran, laquelle action publicitaire fait la publicité du produit ou du fournisseur (4) lui-même, le client (8) clique sur un lien correspondant délivré au client sous la forme d'une partie de l'action publicitaire (22) et se trouve ainsi automatiquement connecté à un serveur (20) via une liaison de télécommunication VoIP, ledit serveur transférant la liaison de télécommunication VoIP vers le fournisseur (4) afin que la commande soit passée, dans lequel un identifiant univoque (14) de l'action publicitaire est communiqué au serveur (20) en vue de l'évaluation de l'action publicitaire (22) et l'identifiant univoque (14) est transmis automatiquement au serveur (20), et dans lequel la page réseau (21) délivrée au client (8) sur un écran et contenant l'action publicitaire (22) est générée de manière dynamique en fonction d'un mot-clé d'un moteur de recherche,
**caractérisé en ce que**
le serveur (20) extrait automatiquement d'une base de données (18) une information relative à l'action publicitaire (22) et associée à l'identifiant (14) et retransmet cette information à un système de traçage (7) en vue de l'évaluation de l'action publicitaire (22), l'information relative à l'action publicitaire (22) comprenant un nom et/ou le mot-clé.

2. Procédé selon la revendication 1, **caractérisé en ce qu'**une communication VoIP vers le serveur (20) est automatiquement établie lorsque le client (8) clique sur le lien et ledit serveur transfère ensuite la communication VoIP vers le fournisseur (4) en vue de la commande du produit.

3. Procédé selon la revendication 1 ou la revendication 2, **caractérisé en ce que** l'identifiant univoque (14) est transmis au serveur (20) via la communication VoIP, ledit serveur appelle l'information relative à l'action publicitaire (22) contenue dans la base de données (18) et retransmet cette information à un système de traçage (7) en vue de l'évaluation de l'action publicitaire (22).

4. Procédé selon la revendication 1 ou la revendication 2, **caractérisé en ce que** l'identifiant univoque (14) est transmis au serveur (20) via la communication VoIP, ledit serveur appelle l'information relative à l'action publicitaire (22) contenue dans la base de données (18) et transmet automatiquement cette information à un serveur d'un système de traçage (7) en vue de l'évaluation de l'action publicitaire (22).

5. Procédé selon l'une des revendications 1 à 4, **caractérisé en ce que** le serveur (20) ou le serveur d'un système de traçage (7) provoque automatiquement un prolongement, une modification ou un arrêt de l'action publicitaire (22) en fonction du résultat de l'évaluation de l'action publicitaire (22).

6. Procédé selon l'une quelconque des revendications 1 à 5, **caractérisé en ce que** le serveur (20) ou le serveur d'un système de traçage (7) détermine le nombre total de communications VoIP établies via un numéro de téléphone (13) associé à l'action publicitaire (22).

7. Procédé selon la revendication 6, **caractérisé en ce que** le serveur (20) ou le serveur d'un système de traçage (7) établit un rapport entre le nombre total de communications VoIP et les dépenses engagées pour l'action publicitaire (22).

8. Procédé selon l'une quelconque des revendications 1 à 7, **caractérisé en ce que** le serveur (20) ou le serveur d'un système de traçage (7) détermine la durée des différentes communications VoIP établies via un numéro de téléphone (13) associé à l'action publicitaire (22).

9. Procédé selon la revendication 8, **caractérisé en ce que** le serveur (20) ou le serveur d'un système de traçage (7) détermine la durée moyenne des différentes communications VoIP établies via un numéro de téléphone (13) associé à l'action publicitaire (22).

10. Procédé selon la revendication 8 ou la revendication 9, **caractérisé en ce que** le serveur (20) ou le serveur d'un système de traçage (7) établit un rapport entre la durée ou la durée moyenne des communications VoIP et les dépenses engagées pour l'action publicitaire (22).

11. Procédé selon l'une quelconque des revendications 1 à 10, **caractérisé en ce que** le serveur (20) ou le serveur d'un système de traçage (7), afin de déterminer les informations de traçage, suit les communications VoIP jusqu'au moment d'une commande effective du produit auprès du fournisseur (4).

12. Procédé selon la revendication 11, **caractérisé en ce que** le serveur (20) ou le serveur d'un système de traçage (7) établit un rapport entre le nombre de commandes effectives déclenchées par l'action publicitaire (22) et les dépenses engagées pour l'action publicitaire (22).

13. Procédé selon l'une quelconque des revendications 1 à 12, **caractérisé en ce que** le serveur (20) ou le serveur d'un système de traçage (7) extrait l'identifiant univoque (14) de l'action publicitaire (22) du numéro de téléphone (13) composé pour la communication VoIP.

14. Serveur (20) auquel un client (8) peut accéder via une liaison de télécommunication, comprenant des moyens permettant de transférer la liaison de télécommunication vers un fournisseur (4) en vue de la commande d'un produit, et comprenant des moyens de réception d'un identifiant univoque (14) d'une action publicitaire (22) délivrée au client (8) via une page réseau (21) et qui fait la publicité du produit ou du fournisseur (4) lui-même, en vue d'évaluer l'action publicitaire (22), **caractérisé en ce que** le serveur (20) a accès à une base de données (18) dans laquelle sont enregistrés l'identifiant univoque (14) de l'action publicitaire (22) et une information relative à l'action publicitaire (22) et associée à l'identifiant (14), et **en ce que** le serveur (20) comprend des moyens pour appeler automatiquement l'information associée relative à l'action publicitaire (22) contenue dans la base de données (18) ainsi que des moyens d'évaluation de l'action publicitaire (22), ledit serveur retransmettant l'information appelée à un système de traçage (7), l'information relative à l'action publicitaire (22) comprenant un nom et/ou un mot-clé d'un moteur de recherche d'une page réseau (21) préalablement générée de manière dynamique en fonction du mot-clé et contenant l'action publicitaire (22).
